# EUROPÄISCHE PATENTSCHRIFT

(11) **EP 1 185 436 B1**
(45) Veröffentlichungstag und Bekanntmachung des Hinweises auf die Patenterteilung: **09.09.2015**
(21) Anmeldenummer: 01913718.1
(22) Anmeldetag: 24.02.2001
(51) Int. Cl.: B60Q 1/48, B60Q 9/00

(54) **AUFNAHMEVORRICHTUNG UND VERFAHREN ZUR FAHRZEUGUMFELDERFASSUNG MIT WENIGSTENS EINER KAMERA**
HOLDING DEVICE AND METHOD FOR DETECTING A VEHICLE ENVIRONMENT WITH AT LEAST ONE CAMERA
DISPOSITIF DE PRISE DE VUES ET PROCEDE DE DETECTION DE L'ENVIRONNEMENT D'UN VEHICULE AU MOYEN D'AU MOINS UNE CAMERA

(30) Priorität: 17.03.2000 DE 10013425
(43) Veröffentlichungstag der Anmeldung: 13.03.2002
(73) Patentinhaber: ROBERT BOSCH GMBH, 70442 Stuttgart (DE)
(72) Erfinder: PÖCHMÜLLER, Werner, 31139 Hildesheim (DE)
(86) Internationale Anmeldenummer: PCT/DE2001/000723
(87) Internationale Veröffentlichungsnummer: WO 2001/068403

(56) Entgegenhaltungen:
- DE-U- 9 106 201
- DE-U- 29 807 969
- US-A- 4 855 878

## Beschreibung

### Stand der Technik

Die Erfindung geht aus von einer Aufnahmevorrichtung bzw. einem Verfahren zur Fahrzeugumfelderfassung mit wenigstens einer Kamera nach der Gattung der unabhängigen Patentansprüche.

Es sind bereits Einparkhilfen zur Fahrzeugumfelderfassung bekannt, die einerseits Radar und andererseits Ultraschallsensoren verwenden. Darüber hinaus ist der Einsatz von Kameras zur Fahrzeugumfelderfassung bekannt, wobei die Kameras eine feste Position in dem Fahrzeug einnehmen, wobei die Position weiterhin so ausgewählt ist, dass die Kamera keine, optisch nicht transparenten Hindernisse durch das Fahrzeug in ihrem Blickfeld aufweist.

Aus der US 4,855,878 ist ein Rückfahrscheinwerfer für ein Kraftfahrzeug bekannt, wobei der Rückfahrscheinwerfer aus einem Gehäuse ausfahrbar ist. Das deutsche Gebrauchsmuster DE 9106 201 U1 offenbart eine Einparkhilfe für Fahrzeuge, wobei ein Berührungssensor an einer ein- und ausfahrbaren Trägerstange angeordnet ist. Aus der DE 298 07 969 U1 ist ein Peripherieüberwachungssystem an Teleskopstangen für Fahrzeuge bekannt, wobei ein Bildsensor an einem oberen Endabschnitt der Teleskopstange angeordnet ist.

Aus der JP-A-3189247 ist eine Vorrichtung gemäß dem Oberbgeriff der unabhängigen Ansprüche 1 bzw. 10 bekannt.

### Vorteile der Erfindung

Die erfindungsgemäße Aufnahmevorrichtung bzw. das erfindungsgemäße Verfahren zur Fahrzeugumfelderfassung mit wenigstens einer Kamera haben demgegenüber den Vorteil, dass aufgrund der Ausfahrbarkeit der Kamera mittels der erfindungsgemäßen Aufnahmevorrichtung eine optimale Beobachtungsposition zur Fahrzeugumfelderfassung am Fahrzeug gewählt wird, ohne dass Einfluß auf das Fahrzeugdesign selbst genommen wird. Vorteilhafterweise verschwindet die Aufnahmevorrichtung im eingefahrenen Zustand in der Karosserie des Fahrzeugs. Weiterhin ist es dabei von Vorteil, dass die wenigstens eine Kamera vor Verschmutzung geschützt ist, wenn sie nicht benötigt wird.

Durch die erfindungsgemäße Aufnahmevorrichtung, die bei Betätigung eines Rückwärtsganges ausgefahren wird und bei einer Vorwärtsfahrt und bei Übertreten eines vorgegebenen Geschwindigkeitswerts wieder eingefahren wird, erhöht sich die Wahrscheinlichkeit, dass die Aufnahmevorrichtung nur bei Einparkvorgängen ausgefahren wird, die die weitaus häufigste Anwendung der Kameras darstellen. So wird das nutzlose Ausfahren der erfindungsgemäßen Aufnahmevorrichtung reduziert.

Durch die in den abhängigen Ansprüchen aufgeführten Maßnahmen und Weiterbildungen sind vorteilhafte Verbesserungen der in den unabhängigen Patentansprüchen angegebenen Aufnahmevorrichtung bzw. des in den unabhängigen Patentansprüchen angegebenen Verfahrens zur Fahrzeugumfelderfassung mit wenigstens einer Kamera möglich.

Besonders vorteilhaft ist, dass die erfindungsgemäße Aufnahmevorrichtung neben einer Kamera eine weitere Vorrichtung aufnimmt, wodurch ein geringerer Gesamtaufwand ermöglicht wird. Solch eine weitere Vorrichtung ist. einerseits ein Kofferraumgriff und andererseits eine Scheibenwascheinrichtung, die jeweils an dem Fahrzeug ebenfalls ausfahrbar sind. Damit wird vorteihafterweise die Montage der Kamera sehr einfach.

Weiterhin ist es von Vorteil, dass die erfindungsgemäße Aufnahmevorrichtung in Abhängigkeit von einem Geschwindigkeitssignal automatisch ausgefahren wird, wobei die Aufnahmevorrichtung hier nur bei geringen Geschwindigkeiten ausgefahren wird, die insbesondere bei einem Einparkvorgang auftreten und nur hier ist die Kamera auf der Aufnahmevorrichtung notwendig.

Darüber hinaus ist es von Vorteil, dass die erfindungsgemäße Aufnahmevorrichtung in Abhängigkeit eines Getriebestellsignals ausgefahren wird. Damit wird insbesondere die Aufnahmevorrichtung beim Einlegen eines Rückwärtsgangs oder dem Einlegen des ersten Ganges ausgefahren. Diese beiden Gänge einer Gangschaltung eines Fahrzeugs werden beim Einparken oder Ausparken verwendet. Damit vorteilhafterweise automatisch dem Fahrer diese zusätzliche Hilfe zur Fahrzeugumfelderfassung angeboten. Damit wird die Sicherheit beim Einparken entscheidend erhöht. Dabei ist es insbesondere von Vorteil, dass Signale von der Kamera nur in Fahrtrichtung angezeigt werden, so dass der Fahrer nur mit Informationen, die er für seinen Steuervorgang benötigt, versorgt wird.

Es ist weiterhin von Vorteil, dass die erfindungsgemäße Aufnahmevorrichtung durch ein Bedienelement, das der Fahrer betätigt, ausgefahren werden kann. Damit ist es möglich, dass der Fahrer in einem Fall, wo er die Fahrzeugumfelderfassung durch Kameras benötigt, aber dies nicht automatisch geschieht, er dies selbst mittels des Bedienelements veranlassen kann. Damit steht die erfindungsgemäße Aufnahmevorrichtung dem Fahrer in allen Situationen zur Disposition.

Darüber hinaus ist es von Vorteil, dass die erfindungsgemäße Aufnahmevorrichtung an der Kofferraumkante des Fahrzeugs plaziert wird, wodurch ein guter Überblick ermöglicht wird, der insbesondere beim rückwärtigen Einparken zur Erkennung von sich nähernden Personen und dem weiteren Umfeld von großem Nutzen ist. Damit wird die Sicherheit der erfindungsgemäßen Vorrichtung entscheidend erhöht.

Darüber hinaus ist es von Vorteil, dass eine Kamera im Markenzeichen eines Fahrzeugherstellers integriert wird, wobei sich das Markenzeichen auf der Kofferraumhaube des Fahrzeugs befindet. Daraus ergibt sich der Vorteil, dass das Markenzeichen die Ränder der ausfahrbaren oder klappbaren Aufnahmevorrichtung versteckt. Weiterhin ist die Kameraposition relativ hoch, so dass sich eine ausgezeichnete Fahrzeugumfelderfassung ergibt.

Schließlich ist es auch von Vorteil, dass die erfindungsgemäße Aufnahmevorrichtung bei einer Rückwärtsfahrt ausgefahren wird und bei einer Vorwärtsfahrt eingefahren wird. Damit wird nur der Rückwärtsgang als notwendige Bedingung für eine Fahrzeugumfelderfassung mittels wenigstens einer Kamera verwendet.

### Zeichnung

Ausführungsbeispiele der Erfindung sind in der Zeichnung dargestellt und in der nachfolgenden Beschreibung näher erläutert. Es zeigen Figur 1 eine rückwärtige Ansicht eines Fahrzeugs, Figur 2 die ausgefahrene erfindungsgemäße Aufnahmevorrichtung am Heck des Fahrzeugs, Figur 3 die Ansicht einer Fahrzeugfront, Figur 4 die Ansicht des Fahrzeugs aus der Vogelperspektive mit ausgefahrener erfindungsgemäßer Aufnahmevorrichtung aus der Fahrzeugfront, Figur 5 ein erstes erfindungsgemäßes Verfahren in einem Flußdiagramm, Figur 6 ein zweites erfindungsgemäßes Verfahren in einem Flußdiagramm und Figur 7 ein Blockschaltbild einer Anzeigevorrichtung mittels einer Kamera.

### Beschreibung

Bei der Einführung von Kameras oder Videosensoren zur Fahrzeugumfelderfassung ist es entscheidend, wie diese Sensoren plaziert werden. Dabei ist zu berücksichtigen, dass die optische Einsicht in den zu überwachenden Bereich frei ist, eine einfache Montage möglich ist, geringe Kosten entstehen und ein optisch ansprechendes Design vorliegt.

Um dabei mit möglichst wenigen Kameras oder Videosensoren auszukommen und dabei dennoch eine optimale Fahrzeugumfelderfassung zu gewähren, sind nur wenige vorteilhafte Positionen an einem Fahrzeug nutzbar. Diese Positionen befinden sich möglichst zentral an hoch gelegenen Stellen am Fahrzeug, z.B. der Dachkante, der Kofferraumhaube, die Rückscheibe und die Motorhaube. Erfindungsgemäß erfolgt daher der Einbau der Kamera oder der Videosensoren an optimalen Beobachtungspositionen nittels einer ausfahrbaren Aufnahmevorrichtung, ohne das Fahrzeugdesign negativ zu beeinflussen. Weiterhin wird das Kameraobjektiv im normalen Fahrbetrieb vor Verschmutzungen dabei geschützt. Durch die Kombination mit im Fahrzeug vorhandenen Elementen ist eine sehr kostengünstige Integration in das Fahrzeug möglich. Die erfindungsgemäße Aufnahmevorrichtung ist daher so gestaltet, dass sie in Abhängigkeit von Fahrsituationen ausfahrbar ist.

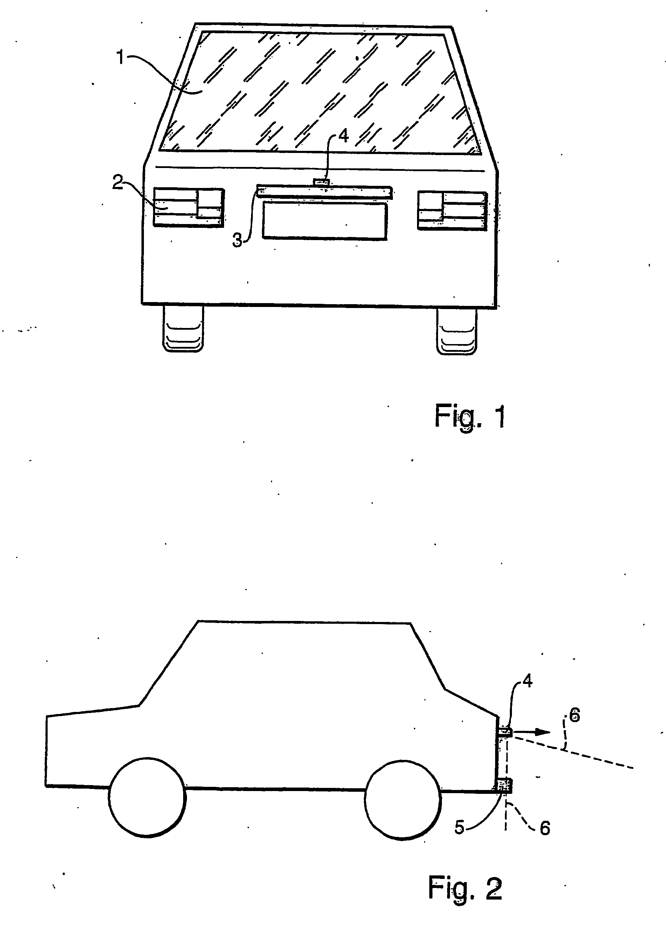

In Figur 1 ist die rückwärtige Ansicht eines Fahrzeugs dargestellt, wobei die erfindungsgemäße Aufnahmevorrichtung in das Fahrzeugheck integriert ist. Figur 1 stellt die Ansicht auf eine Rückscheibe 1 mit Rücklichtern 2 dar. In Träger 3, der zur Aufnahme eines Kofferraumgriffes sowie einer Fahrzeugkennzeichenbeleuchtung vorgesehen ist, ist eine erfindungsgemäße Aufnahmevorrichtung zur Aufnahme einer Kamera angebracht. Die erfindungsgemäße Aufnahmevorrichtung 4 ist hier zentral am Heck des Fahrzeugs angebracht. Damit wird ein optimales Blickfeld für die Kamera, die sich auf der Aufnahmevorrichtung 4 befindet, ermöglicht. Vorteilhafterweise ist hier die Kamera mit dem Kofferraumgriff zusammen auf der Aufnahmevorrichtung 4. Alternativ ist es möglich, dass die Aufnahmevorrichtung 4 nur die Kamera trägt.

In Figur 2 ist die ausgefahrene erfindungsgemäße Aufnahmevorrichtung 4 am Heck des Fahrzeugs in der Seitenansicht des Fahrzeugs schematisch dargestellt. Die Aufnahmevorrichtung 4 ist dabei so an dem Fahrzeug angebracht, dass sie das Blickfeld, das durch den Erfassungswinkel beschrieben ist, der sich zwischen den gestrichelten Linien 6 befindet. Damit ist als Orientierungshilfe die Stoßstange 5 des Fahrzeugs im Blickfeld der Kamera und der untere rückwärtige Raum hinter dem Fahrzeug.

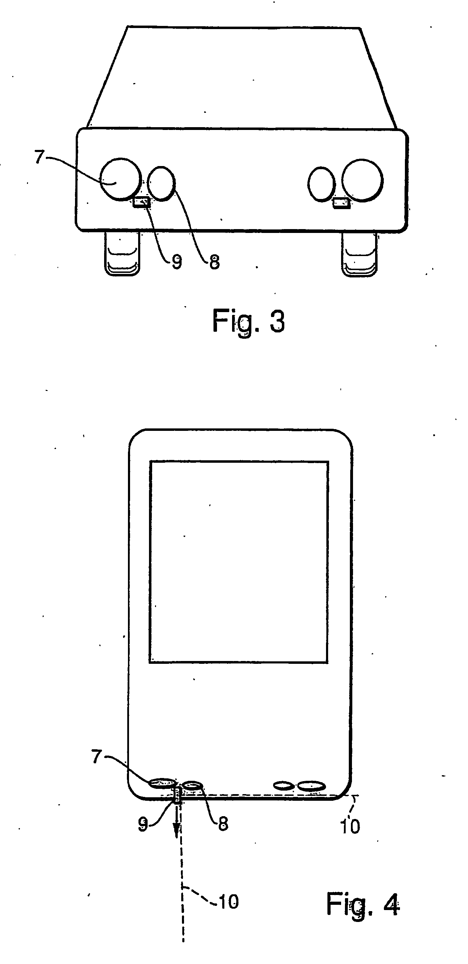

In Figur 3 ist eine Frontansicht des Fahrzeugs dargestellt, wobei die erfindungsgemäße Aufnahmevorrichtung in der Fahrzeugfront plaziert ist. Zwischen den Scheinwerfern 7 und 8 befindet sich jeweils ein Träger 9, der für eine Scheibenwaschanlage gedacht ist. Der Träger 9 weist nun auch die Aufnahmevorrichtung für die Kamera selbst auf. Dabei ist die ausfahrbare Aufnahmevorrichtung, die mittels Elektromotoren ausgefahren wird, von einem Prozessor des Fahrzeugs steuerbar. Die Aufnahmevorrichtung kann alternativ auch ausgeklappt werden.

Die Aufnahmevorrichtung weist also hier sowohl die Kamera als auch die Scheibenwischeinrichtung auf. Alternativ ist es hier auch möglich, die Aufnahmevorrichtungen jeweils für die Scheibenwischanlage und die Kamera getrennt an dem Träger 9 anzubringen. Die Kameras sind robust und wasserdicht eingebaut, wobei eine Kapselung, Versiegelung oder Dichtung vorgesehen sein kann.

In Figur 4 ist das Fahrzeug in der Vogelperspektive mit ausgefahrener Aufnahmevorrichtung 9 aus der Fahrzeugfront dargestellt. Die Kamera bzw. der Videosender auf der Aufnahmevorrichtung 9 ist so plaziert und so ausgebildet, dass er den Erfassungswinkel der durch die beiden Linien 10 aufgespannt wird, als Sichtfeld aufweist. Dabei dient die Fahrzeugfront als Orientierungshilfe. Alternativ sind jedoch auch andere Erfassungswinkel je nach Gestalt und Plazierung der Kamera bzw. des Videosensors möglich. Dabei kann z.B. die vordere Stoßstange des Fahrzeugs als Orientierungshilfe dienen. Bei der Plazierung in der Front des Fahrzeugs ist es möglich, entweder nur eine Aufnahmevorrichtung mit einer Scheibenwischeinrichtung zu verwenden oder in beiden Trägern eine Aufnahmevorrichtung für eine Kamera anzubringen. Die Aufnahmevorrichtung kann auch getrennt von der Scheibenwischeinrichtung plaziert werden und zwar in der Mitte der Fahrzeugfront, um einen besseren Beobachtungspunkt für die ausfahrbare Kamera zu gewährleisten und um eine Trennung von der Scheibenwischeinrichtung, die gegebenenfalls Probleme mit der Kameraoptik bzw. Elektronik liefern kann, vorzunehmen.

Die erfindungsgemäßen Aufnahmevorrichtungen können in Kombination der Fahrzeugfront und im Fahrzeugheck angebracht sein oder auch nur im Fahrzeugheck, da insbesondere die Rückansicht von einem Fahrzeug für einen Fahrer ein besonderes Gefährdungspotential mit sich bringt. Die erfindungsgemäße Aufnahmevorrichtung wird dabei angebracht, dass sie im eingefahrenen Zustand in der Karosserie des Fahrzeugs verschwindet.

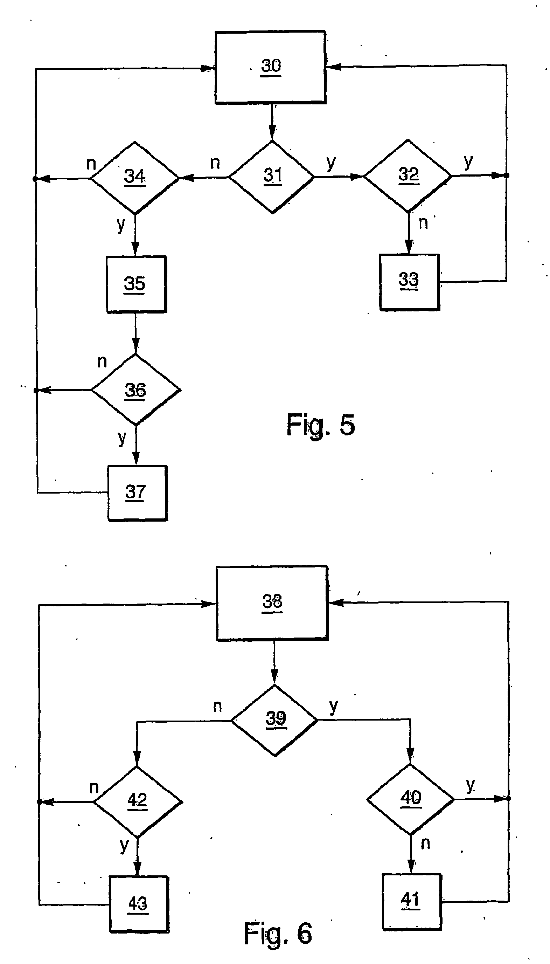

In Figur 5 ist ein Flußdiagramm für ein erstes erfindungsgemäße Verfahren dargestellt. In Verfahrensschritt 30 wird die Getriebestellung des Fahrzeugs bestimmt. Es wird also das Getriebestellsignal untersucht. In Verfahrensschritt 31 wird überprüft, ob der Rückwärtsgang eingelegt ist oder nicht. Ist das der Fall, dann wird in Verfahrensschritt 32 überprüft, ob die Kamera oder Kameras, falls mehrere vorliegen, bereits ausgefahren sind. Sind die Kameras ausgefahren und der Rückwärtsgang eingelegt, wird zu Verfahrensschritt 30 zurückgesprungen, da dann von der Notwendigkeit der Fahrzeugumfelderfassung wie z. B. beim Ein- oder Ausparken ausgegangen wird. Ist oder sind die Kameras nicht ausgefahren, dann werden die Kameras oder die Kamera in Verfahrensschritt 33 ausgefahren; woraufhin zu Verfahrensschritt 30 zurückgesprungen wird.

Wird in Verfahrensschritt 31 festgestellt, dass kein Rückwärtsgang eingelegt ist, dann wird in Verfahrensschritt 34 überprüft, ob die Kamera oder die Kameras bereits ausgefahren sind. Ist das nicht der Fall, dann wird zu Verfahrensschritt 30 zurückgesprungen. Ist oder sind die Kameras jedoch bereits ausgefahren, wird in Verfahrensschritt 35 die Geschwindigkeit des Fahrzeugs erfaßt und in Verfahrensschritt 36 wird dann die Geschwindigkeit mit einem Schwellwert verglichen.

Der Schwellwert ist derart vorgegeben, dass ein Unterschreiten des Schwellwerts eine Ein- oder Ausparksituation und demnach die Notwendigkeit der ausgefahrenen Kameras mit hoher Wahrscheinlichkeit bei einer Vorwärtsfahrt nahelegt. Ein Überschreiten des Schwellwerts legt demnach eine normale Vorwärtsfahrt oder eine schnelle Ein- oder Ausparkhandlung nahe, die beide die Verwendung der ausgefahrenen Kameras nicht notwendig erscheinen lassen. Daher wird bei einem Unterschreiten des Schwellwerts zu Verfahrensschritt 30 zurückgesprungen, d.h. die Kameras bleiben ausgefahren, und bei einem Überschreiten des Schwellwerts wird in Verfahrensschritt 37 die erfindungsgemäße Aufnahmevorrichtung jeder ausgefahrenen Kamera wieder eingefahren. Nach Verfahrensschritt 37 wird zu Verfahrensschritt 30 zurückgesprungen, so dass das Verfahren erneut beginnt. Das Verfahren wird laufend durchgeführt, um einerseits die Notwendigkeit der ausgefahrenen Kameras automatisch zu überprüfen und um andererseits die Kameras nur so lange wie notwendig ausgefahren zu lassen.

In Figur 6 wird ein zweites erfindungsgemäßes Verfahren zur Fahrzeugumfelderfassung als Flußdiagramm dargestellt. In Verfahrensschritt 38 wird das Getriebestellsignal erfaßt. In Verfahrensschritt 39 wird überprüft, ob der Rückwärtsgang eingelegt ist oder nicht. Ist der Rückwärtsgang eingelegt, dann wird in Verfahrensschritt 40 überprüft, ob die Kamera oder die Kameras schon ausgefahren sind. Ist das der Fall, dann wird zu Verfahrensschritt 38 zurückgesprungen, da die Kameras zur rückwärtigen Fahrzeugumfelderfassung ausgefahren sind. Sind die Kameras jedoch nicht ausgefahren, dann wird in Verfahrensschritt 41 die erfindungsgemäße Aufnahmevorrichtungen der vorhandenen Kameras ausgefahren, um dann zu Verfahrensschritt 38 zurückzuspringen.

Wird in Verfahrensschritt 39 festgestellt, dass der Rückwärtsgang nicht eingelegt ist, dann wird in Verfahrensschritt 42 überprüft, ob die vorhandenen Kameras mittels der erfindungsgemäßen Aufnahmevorrichtung ausgefahren sind oder nicht. Sind die vorhandenen Kameras bereits ausgefahren, da werden die vorhandenen Kameras in Verfahrensschritt 43 eingefahren, da in diesem erfindungsgemäßen Verfahren nur Kameras zur rückwärtigen Fahrzeugumfelderfassung verwendet werden. Nach Verfahrensschritt 43 werden zu Verfahrensschritt 38 zurückgesprungen. Wurde in Verfahrensschritt 42 festgestellt, dass die Kameras bereits eingefahren sind, dann wird zu.Verfahrensschritt 38 zurückgesprungen.

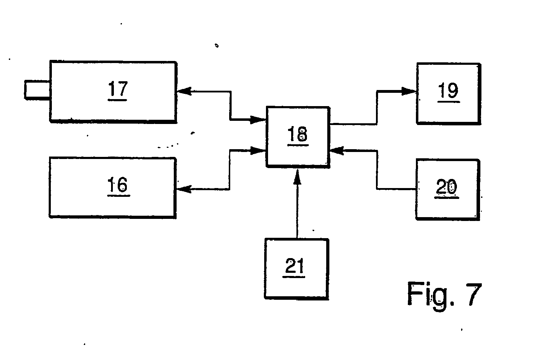

In Figur 7 ist ein Blockschaltbild einer Beobachtungsvorrichtung in einem Fahrzeug dargestellt. Eine Kamera 17 ist auf einer erfindungsgemäßen Aufnahmevorrichtung 16 plaziert. Die Kamera 17 ist über einen ersten Datenein-/ausgang eines Prozessors 18 mit dem Prozessor 18 verbunden. Ober seinen zweiten Datenein/ausgang ist der Prozessor 18 mit der erfindungsgemäßen Aufnahmevorrichtung verbunden. Über seinen Datenausgang ist der Prozessor 18 an eine Anzeige 19 angeschlossen. An einen ersten Dateneingang des Prozessors 18 ist eine Eingabevorrichtung 20 angeschlossen. An einen zweiten Dateneingang des Prozessors 18 sind Sensoren 21 angeschlossen.

Die Kamera 17 gibt aufgenommene Bildsignale an den Prozessor 18 weiter, falls die Kamera 17 automatisch oder mittels der Eingabevorrichtung 20 aktiviert wurde. Ist die Kamera 17 aktiviert, dann wird die Kamera 17 mittels der Aufnahmevorrichtung 16 aus der Karosserie des Fahrzeugs, wie oben dargestellt, herausgefahren. Die Aufnahmevorrichtung 16 wird nach den in Figur 5 und Figur 6 beschriebenen Verfahren automatisch ausgefahren oder durch eine Eingabe des Benutzers mittels der Eingabevorrichtung 20.

Der Prozessor 18 fährt dann die Aufnahmevorrichtung 16 aus, wenn Signale von den Sensoren 21 signalisiert werden. Dazu weisen die Sensoren 21 eine Verbindung zu einem Geschwindigkeitsmesser, zum Beispiel ein Tachometer, und zum Getriebe auf, wobei das Getriebe ein manuell schaltbares oder ein automatisches Getriebe sein kann. Mittels dieser Verbindung erhalten die Sensoren 21 das Geschwindigkeitssignal und das Getriebestellsignal. Darüber hinaus weisen die Sensoren 21 einen Speicher und eine Auswerteelektronik auf, um Signale von dem Geschwindigkeitsmesser und dem Getriebe auszuwerten. Der Prozessor 18 führt also die erfindungsgemäßen Verfahren aus.

Liegt mehr als eine Kamera vor, wird das Getriebestellsignal verwendet, um auch die Kamera zu aktivieren, die in Fahrtrichtung plaziert ist, wie in Figur 1 und 3 jeweils dargestellt. Der Prozessor 18 führt dann die entsprechende Durchschaltung zur Anzeige 19 durch. Die Anzeige 19 ist hier ein Bildschirm, der auch von einem Infotainmentsystem benutzt werden kann. Alternativ kann ein Netzhautprojektor oder ein stereoskopischer Bildschirm verwendet werden, um eine dreidimensionale Darstellung des Fahrzeugumfeldes zu erreichen, was einen besseren Erkennungswert aufweist und damit zu einer besseren Steuerung des Fahrzeugs führt. Werden gleichzeitig mehrere Kameras in verschiedenen Richtungen verwendet, dann können auch auf der Anzeige 19 gleichzeitig die Signale von diesen Kameras dargestellt werden, indem die Anzeigenfläche entsprechend geteilt wird.

Mit der Eingabevorrichtung 20, die hier haptische Bedienelemente repräsentiert, kann der Fahrer die Aufnahmevorrichtung aktivieren, um mittels der Kamera 17 eine Fahrzeugumfelderfassung durchzuführen. Die Eingabevorrichtung 20 weist Sensorik und Elektronik auf, die die haptischen Eingaben in elektrische Signale umwandelt, die der Prozessor 18 interpretieren kann. Alternativ kann die Eingabevorrichtung 20 als Spracheingabe realisiert sein, wobei dann die Eingabevorrichtung 20 einen Sprachprozessor aufweist, um die Sprachsignale, die mittels eines Mikrofons in elektrische Signale umgewandelt werden, in Daten umzuwandeln, die der Prozessor 18 als Ausführungsbefehle interpretiert.

Die Kamera, die im Heck des Fahrzeugs plaziert ist, kann auch im Markenzeichen des Fahrzeugherstellers integriert sein. Solch ein Markenzeichen ist beispielsweise der Mercedesstern. Das Markenzeichen ist auf der Kofferraumhaube plaziert. Soll die Kamera ausgefahren werden, dann klappt das Markenzeichen auf und die erfindungsgemäße Aufnahmevorrichtung wird ausgefahren.

## Patentansprüche

1. Vorrichtung umfassend eine Kofferraumhaube, eine Kamera und eine Aufnahmevorrichtung (4, 9) für die Kamera an einem Fahrzeug, wobei die Aufnahmevorrichtung (4, 9) an der Karosserie des Fahrzeugs angebracht ist und die Kamera mittels der Aufnahmevorrichtung aus der Karosserie ausfahrbar ist, wobei die Vorrichtung ein Markenzeichen eines Fahrzeugherstellers umfasst und wobei die Aufnahmevorrichtung (4, 9) in das Markenzeichen des Fahrzeugherstellers, das auf der Kofferraumhaube befestigt ist, integriert ist, dergestalt, dass bei einem Ausfahren der Kamera das Markenzeichen des Fahrzeugherstellers aufklappt und die Aufnahmevorrichtung ausfährt, **dadurch gekennzeichnet, dass** ein Prozessor (18) vorgesehen ist, mittels dem die Kamera bei einer Rückwärtsfahrt des Fahrzeugs ausgefahren wird, und mittels dem bei einer Vorwärtsfahrt und bei dem Überschreiten eines vorgegebenen Geschwindigkeitswertes wieder eingefahren wird.

2. Vorrichtung nach Anspruch 1, **dadurch gekennzeichnet, dass** die Aufnahmevorrichtung (4, 9) neben der Kamera eine weitere Vorrichtung aufnimmt.

3. Vorrichtung nach Anspruch 2, **dadurch gekennzeichnet, dass** die weitere Vorrichtung eine Scheibenwischeinrichtung ist.

4. Vorrichtung nach Anspruch 2, **dadurch gekennzeichnet, dass** die weitere Vorrichtung ein Kofferraumgriff ist.

5. Vorrichtung nach Anspruch 4, **dadurch gekennzeichnet, dass** der Prozessor (18) die Aufnahmevorrichtung (4, 9) in Abhängigkeit eines Geschwindigkeitssignals ausfährt.

6. Vorrichtung nach Anspruch 5, **dadurch gekennzeichnet, dass** der Prozessor (18) die Aufnahmevorrichtung (4, 9) in Abhängigkeit eines Getriebestellsignals ausfährt.

7. Vorrichtung nach Anspruch 5, **dadurch gekennzeichnet, dass** der Prozessor (18) die Aufnahmevorrichtung (4, 9) in Abhängigkeit eines Signals von einem Bedienelement (20) ausfährt.

8. Fahrzeug mit einer Vorrichtung nach einem der vorhergehenden Ansprüche, **dadurch gekennzeichnet, dass** die Aufnahmevorrichtung (4, 9) an einer Kofferraumkante des Fahrzeugs befestigt ist.

9. Verfahren zur Fahrzeugumfelderfassung mit einer Kamera und einer in ein Markenzeichen eines Fahrzeugherstellers, das auf einer Kofferraumhaube des Fahrzeugs befestigt ist, derart integrierten Aufnahmevorrichtung für die Kamera, dass bei einem Ausfahren der Kamera das Markenzeichen des Fahrzeugherstellers aufklappt und die Kamera ausgefahren wird, wobei das Fahrzeugumfeld mit der Kamera erfasst wird, **dadurch gekennzeichnet, dass** die Kamera bei einer Rückwärtsfahrt des Fahrzeugs ausgefahren wird, und dass die Kamera bei einer Vorwärtsfahrt und bei dem Überschreiten eines vorgegebenen Geschwindigkeitswertes wieder eingefahren wird.

10. Verfahren nach Anspruch 9, **dadurch gekennzeichnet, dass** verschiedene Aufnahmevorrichtungen (4, 9) mit Kameras gleichzeitig ausgefahren werden und eine Anzeige der Kameras auf den Aufnahmevorrichtungen (4, 9) jeweils in Fahrrichtung erfolgt.

## Claims

1. Device comprising a boot lid, a camera and a mounting device (4, 9) for mounting the camera on a vehicle, wherein the mounting device (4, 9) is attached to the bodywork of the vehicle and the camera can be extended from the bodywork by means of the mounting device, wherein the device comprises a trade mark of a vehicle manufacturer, and wherein the mounting device (4, 9) is integrated into the trade mark of the vehicle manufacturer which is attached to the boot lid, configured such that, when the camera is extended, the trade mark of the vehicle manufacturer folds open and the mounting device moves out, **characterized in that** a processor (18) is provided, by means of which, when the vehicle reverses, the camera is extended, and by means of which, in the case of forward travel and when a predefined velocity value is exceeded, the camera is retracted again.

2. Device according to Claim 1, **characterized in that** the mounting device (4, 9) accommodates a further device in addition to the camera.

3. Device according to Claim 2, **characterized in that** the further device is a windscreen washing device.

4. Device according to Claim 2, **characterized in that** the further device is a boot handle.

5. Device according to Claim 4, **characterized in that** the processor (18) extends the mounting device (4, 9) as a function of a velocity signal.

6. Device according to Claim 5, **characterized in that** the processor (18) extends the mounting device (4,9) as a function of a transmission actuating signal.

7. Device according to Claim 5, **characterized in that** the processor (18) extends the mounting device (4, 9) as a function of a signal from an operator control element (20).

8. Vehicle having a device according to one of the preceding claims, **characterized in that** the mounting device (4, 9) is attached to the edge of the boot of the vehicle.

9. Method for sensing the surroundings of a vehicle with a camera and a mounting device for the camera, which mounting device is integrated into a trade mark of a vehicle manufacturer, which is attached to a boot lid, in such a way that, when the camera is extended the trade mark of the vehicle manufacturer folds open and the camera is extended, wherein the surroundings of the vehicle are sensed with the camera, **characterized in that** when the vehicle reverses, the camera is extended, and **in that** in the case of forward travel and when a predefined velocity value is exceeded, the camera is retracted again.

10. Method according to Claim 9, **characterized in that** various mounting devices (4, 9) are extended simultaneously with cameras, and the cameras on the mounting devices (4, 9) are respectively extended in the direction of travel.

## Revendications

1. Dispositif comprenant un capot de coffre, une caméra et un dispositif de prise de vue (4, 9) pour la caméra sur un véhicule, dans lequel le dispositif de prise de vue (4, 9) est monté sur la carrosserie du véhicule et la caméra peut être déployée hors de la carrosserie au moyen du dispositif de prise de vue, dans lequel le dispositif comprend un marquage d'un fabricant du véhicule et dans lequel le dispositif de prise de vue (4, 9) est intégré dans le marquage du fabricant du véhicule qui est fixé sur le capot de coffre de telle sorte que lors d'un déploiement de la caméra le marquage du fabricant du véhicule se replie et le dispositif de prise de vue se déploie, **caractérisé en ce qu'**un processeur (18) est prévu, au moyen duquel la caméra est déployée lors d'une marche arrière du véhicule et au moyen duquel elle est de nouveau rétractée lors d'une marche avant et lors du dépassement d'une valeur de vitesse prescrite.

2. Dispositif selon la revendication 1, **caractérisé en ce que** le dispositif de prise de vue (4, 9) renferme un autre dispositif en plus de la caméra.

3. Dispositif selon la revendication 2, **caractérisé en ce que** le dispositif supplémentaire est un dispositif d'essuie-glace.

4. Dispositif selon la revendication 2, **caractérisé en ce que** le dispositif supplémentaire est une poignée de coffre.

5. Dispositif selon la revendication 4, **caractérisé en ce que** le processeur (18) déploie le dispositif de prise de vue (4, 9) en fonction d'un signal de vitesse.

6. Dispositif selon la revendication 5, **caractérisé en ce que** le processeur (18) déploie le dispositif de prise de vue (4, 9) en fonction d'un signal de réglage de transmission.

7. Dispositif selon la revendication 5, **caractérisé en ce que** le processeur (18) déploie le dispositif de prise de vue (4, 9) en fonction d'un signal d'un élément de manipulation (20).

8. Véhicule comportant un dispositif selon une des revendications précédentes, **caractérisé en ce que** le dispositif de prise de vue (4, 9) est fixé sur une arête du coffre du véhicule.

9. Procédé de détection de l'environnement d'un véhicule au moyen d'une caméra et d'un dispositif de prise de vue pour la caméra intégré dans un marquage d'un fabricant du véhicule qui est fixé sur un capot de coffre du véhicule, de telle sorte que lors d'un déploiement de la caméra le marquage du fabricant du véhicule est replié et la caméra est déployée, dans lequel l'environnement du véhicule est détecté avec la caméra, **caractérisé en ce que** la caméra est déployée lors d'une marche arrière du véhicule et **en ce que** la caméra est de nouveau rétractée lors d'une marche avant et lors du dépassement d'une valeur de vitesse prescrite.

10. Procédé selon la revendication 9, **caractérisé en ce que** différents dispositifs de prise de vue (4, 9) sont déployés simultanément avec des caméras et un affichage des caméras a lieu respectivement dans la direction de conduite sur les dispositifs de prise de vue (4, 9).
